# EUROPÄISCHE PATENTSCHRIFT

(11) **EP 2 742 492 B1**
(45) Veröffentlichungstag und Bekanntmachung des Hinweises auf die Patenterteilung: **17.02.2021**
(21) Anmeldenummer: 12751257.2
(22) Anmeldetag: 08.08.2012
(51) Int. Cl.: G07D 7/04, H01F 13/00, G06K 7/08

(54) **PRÜFANORDNUNG ZUR WERTDOKUMENTPRÜFUNG**
TEST CONFIGURATION FOR TESTING SECURITY DOCUMENTS
AGENCEMENT D'ESSAI POUR LE CONTRÔLE DE DOCUMENTS DE VALEUR

(30) Priorität: 10.08.2011 DE 102011109949
(43) Veröffentlichungstag der Anmeldung: 18.06.2014
(73) Patentinhaber: Giesecke+Devrient Currency Technology GmbH, 81677 München (DE)
(72) Erfinder: PAUL, Elisabeth, 83064 Raubling (DE); SCHÜTZMANN, Jürgen, 85276 Pfaffenhofen (DE)
(86) Internationale Anmeldenummer: PCT/EP2012/003384
(87) Internationale Veröffentlichungsnummer: WO 2013/020702

(56) Entgegenhaltungen:
- DE-A1-102004 049 999
- DE-A1-102008 061 507
- DE-A1-102011 106 263
- US-A1- 2008 111 544

## Beschreibung

Die vorliegende Erfindung betrifft eine Prüfanordnung zur Prüfung eines Wertdokuments mit einem Sicherheitselement, ein entsprechendes Prüfverfahren zur Wertdokumentprüfung sowie eine Vorrichtung mit einer derartigen Prüfanordnung zur Bearbeitung von Wertdokumenten.

Wertdokumente im Sinne der vorliegenden Erfindung sind z.B. Banknoten, Schecks, Karten, Tickets, Coupons oder dergleichen. Zur Herstellung oder Verbesserung der Fälschungssicherheit derartiger Wertdokumente ist es bekannt, diese mit Sicherheitselementen auszustatten, wie z.B. Sicherheitsstreifen oder Sicherheitsfäden, die magnetische bzw. magnetisierbare Materialien mit unterschiedlichen Koerzitivfeldstärken enthalten. Zur magnetischen Kodierung eines Sicherheitselements kann eine bestimmte, charakteristische Abfolge von magnetischen und nichtmagnetischen Bereichen dienen. Zum Beispiel können, aus magnetischen Materialen mit unterschiedlichen Koerzitivfeldstärken, hochkoerzitive und niederkoerzitive Magnetbereiche auf dem Sicherheitselement gebildet werden, deren Anordnung eine charakteristische und maschinenprüfbare Kodierung des Wertdokuments darstellt. Bei der maschinellen Prüfung werden derartige Sicherheitselemente unterschiedlich starken Magnetfeldern ausgesetzt, um zum Beispiel die hochkoerzitiven Magnetbereiche in einer ersten Magnetisierungsrichtung und die niederkoerzitiven Magnetbereiche in einer davon abweichenden zweiten Magnetisierungsrichtung auszurichten. Mit einer geeigneten Detektoreinrichtung können die verschiedenen Magnetisierungsrichtungen dann erkannt und die Kodierung auf diese Weise überprüft werden, vgl. z.B. DE102004049999 A1.

Bei üblichen Prüfanordnungen werden die zu prüfenden Wertdokumente, vor dem Detektieren von Magnetsignalen, an Magneten zur Magnetisierung des Wertdokuments bzw. des Sicherheitselements vorbei transportiert. Zur Vermeidung von Transportstörungen der Wertdokumente wird bei vielen Prüfanordnungen ein vergleichsweise großer Abstand zwischen den zur Magnetisierung eingesetzten Magneten und dem zu prüfenden Wertdokument vorgesehen. Daraus ergibt sich das Problem, dass bei großen Abständen zwischen dem Wertdokument und den Magneten, trotz des Einsatzes von starken Magneten, kaum eine hinreichende Magnetfeldstärke zum Magnetisieren der hochkoerzitiven Magnetbereiche bereitgestellt werden kann.

Der Erfindung liegt daher die Aufgabe zu Grunde, auf einfache Weise eine ausreichende Magnetfeldstärke zum Magnetisieren von hochkoerzitiven Magnetbereichen eines Sicherheitselements bereitzustellen, ohne die Abstände zwischen den Magneten und den zu prüfenden Wertdokumenten verkleinern zu müssen und damit die Staugefahr des Wertdokumenttransports zu erhöhen.

Diese Aufgabe wird durch eine Prüfanordnung, ein Prüfverfahren und eine Vorrichtung mit den Merkmalen der unabhängigen Ansprüche gelöst. In davon abhängigen Ansprüchen sind vorteilhafte Ausgestaltungen und Weiterbildungen der Erfindung angegeben.

Die erfindungsgemäße Prüfanordnung umfasst entlang eines Transportpfades in Transportrichtung des Wertdokuments eine Magnetisierungseinrichtung zum Magnetisieren des Sicherheitselements und eine Detektoreinrichtung zur Detektion von Magnetsignalen, welche von dem magnetisierten Sicherheitselement ausgehen. Zur Magnetisierung der Magnetmaterialien umfasst die Magnetisierungseinrichtung entlang des Transportpfades in Transportrichtung eine erste und eine zweite Magnetpaareinrichtung, welche jeweils beidseitig zum Transportpfad angeordnete Magnete umfassen.

Die Detektoreinrichtung zur Detektion von Magnetsignalen des Sicherheitselements ist, entlang des Transportpfads betrachtet, nach der Magnetisierungseinrichtung, d.h. nach den beiden Magnetpaareinrichtungen angeordnet, um Magnetsignale des Sicherheitselement aufzunehmen, nachdem dieses durch die beiden Magnetpaareinrichtungen magnetisiert wurde.

Erfindungsgemäß stellt die Magnetisierungseinrichtung durch Zusammenwirken der ersten und der zweiten Magnetpaareinrichtung in einem ersten Abschnitt entlang des Transportpfads des Wertdokuments ein erstes Magnetfeld einer ersten Magnetfeldstärke bereit, die sowohl größer ist als die in Magnetfeldstärke, die in dem ersten Abschnitt durch die erste Magnetpaareinrichtung allein bereitgestellt wird, als auch als die Magnetfeldstärke, die in dem ersten Abschnitt durch die zweite Magnetpaareinrichtung allein bereitgestellt wird. Als allein durch die erste bzw. zweite Magnetpaareinrichtung bereitgestellte Magnetfeldstärke wird dabei die Magnetfeldstärke bezeichnet, die die erste bzw. zweite Magnetpaareinrichtung in dem ersten Abschnitt erzeugen würde, wenn die zweite bzw. erste Magnetpaareinrichtung nicht vorhanden wäre, wobei die Positionen der ersten bzw. zweiten Magnetpaareinrichtung relativ zu dem ersten Abschnitt bei dieser Betrachtung unverändert bleibt. Die erste und zweite Magnetpaareinrichtung sind derart angeordnet, dass der erste Abschnitt, entlang des Transportpfads betrachtet, zwischen der ersten und der zweiten Magnetpaareinrichtung bereitgestellt wird.

Die Prüfanordnung ist insbesondere dazu eingerichtet, ein Wertdokument mit einem Sicherheitselement zu prüfen, welches ein hochkoerzitives Magnetmaterial einer ersten Koerzitivfeldstärke und gegebenenfalls ein niederkoerzitives Magnetmaterial einer zweiten Koerzitivfeldstärke umfasst. Durch das Zusammenwirken der ersten und der zweiten Magnetpaareinrichtung stellt die Magnetisierungseinrichtung ein erstes Magnetfeld bereit, welches eine erste Magnetfeldstärke besitzt, die größer als die erste Koerzitivfeldstärke des hochkoerzitiven Magnetmaterials ist. Mit dem ersten Magnetfeld werden im Rahmen eines ersten Magnetisierungsvorgangs das hochkoerzitive und das niederkoerzitive Magnetmaterial in eine erste Magnetisierungsrichtung ausgerichtet. Das erste Magnetfeld verläuft vorzugsweise parallel zur Transportebene des Wertdokuments, in der das Wertdokument an der Magnetisierungeinrichtung vorbeitransportiert wird, z.B. parallel oder antiparallel zur Transportrichtung oder auch schräg dazu.

Zusätzlich stellt die zweite Magnetpaareinrichtung in einem zweiten Abschnitt entlang des Transportpfads des Wertdokuments ein zweites Magnetfeld bereit, welches eine zweite Magnetfeldstärke besitzt, die kleiner als die erste Koerzitivfeldstärke des hochkoerzitiven Magnetmaterials und größer als die zweite Koerzitivfeldstärke des niederkoerzitiven Magnetmaterials ist. Die zweite Magnetfeldstärke kann durch den Einfluss der ersten Magnetpaareinrichtung reduziert sein im Vergleich zu der durch die zweite Magnetpaareinrichtung in dem zweiten Abschnitt allein bereitgestellten Magnetfeldstärke. Mit dem zweiten Magnetfeld, dessen Magnetfeldstärke geringer ist als die des ersten Magnetfelds, wird im Rahmen eines anschließenden zweiten Magnetisierungsvorgangs nur das niederkoerzitive Magnetmaterial in eine von der ersten Magnetisierungsrichtung verschiedenen Magnetisierungsrichtung ausgerichtet, z.B. in eine zu der ersten Magnetisierungsrichtung antiparallel orientierte Magnetisierungsrichtung. Die Magnetisierungsrichtung des hochkoerzitiven Magnetmaterials wird durch das zweite Magnetfeld nicht verändert. Die zweite Magnetisierungsrichtung verläuft bevorzugt parallel zur Transportebene des Wertdokuments, z.B. antiparallel zur ersten Magnetisierungsrichtung.

Auf diese Weise können mit der Detektoreinrichtung deutlich unterscheidbare Magnetsignale der hoch- und der niederkoerzitiven Magnetbereiche erfasst werden. Aus diesen Magnetsignalen kann dann die räumliche Anordnung der hochkoerzitiven und niederkoerzitiven Magnetbereiche in dem Sicherheitselement bestimmt werden, beispielsweise durch eine zusätzliche Auswerteeinrichtung als Bestandteil der Prüfanordnung, und davon ausgehend eine Kodierung des Sicherheitselements geprüft werden.

Entsprechend umfasst ein erfindungsgemäßes Prüfverfahren die Schritte des Magnetisierens des Sicherheitselements und des Detektierens der resultierenden Magnetsignale, wobei zum Magnetisieren ein erstes und ein zweites Magnetfeld bereitgestellt werden. Die Magnetfeldstärke des ersten Magnetfelds ist hierbei größer als die erste Koerzitivfeldstärke des hochkoerzitiven Materials und die Magnetfeldstärke des zweiten Magnetfelds ist kleiner als die Koerzitivfeldstärke des hochkoerzitiven Magnetmaterials, aber größer als die Koerzitivfeldstärke des niederkoerzitiven Materials. Im Rahmen des ersten Magnetisierungsvorgangs werden dann zunächst das hochkoerzitive und das niederkoerzitive Magnetmaterial durch das erste, stärkere Magnetfeld in die erste Magnetisierungsrichtung ausgerichtet und anschließend wird im Rahmen des zweiten Magnetisierungsvorgangs durch das zweite, schwächere Magnetfeld nur das niederkoerzitive Magnetmaterial in eine zweite Magnetisierungsrichtung ausgerichtet.

Während das erste, stärkere Magnetfeld durch Zusammenwirken der ersten und der zweiten Magnetpaareinrichtung bereitgestellt wird, wird das zweite, schwächere Magnetfeld im Wesentlichen nur durch die zweite Magnetpaareinrichtung bereitgestellt. Erfindungsgemäß wird also die zweite Magnetpaareinrichtung nicht nur zum Bereitstellen des zum Magnetisieren des niederkoerzitiven Magnetmaterials bestimmten zweiten Magnetfelds verwendet, sondern auch dazu, in Zusammenwirkung mit der ersten Magnetpaareinrichtung das erste Magnetfeld bereitzustellen, welches größer als die erste Koerzitivfeldstärke und damit ausreichend stark ist, um das hochkoerzitive Magnetmaterial zuverlässig in die gewünschte Magnetisierungsrichtung zu magnetisieren.

Die vorliegende Erfindung stellt also durch Zusammenwirken der beiden Magnetpaareinrichtungen ein ausreichend starkes erstes Magnetfeld bereit, dessen Feldstärke größer ist als die Feldstärke eines solchen Magnetfelds, das alleine durch die erste Magnetpaareinrichtung - also ohne Zusammenwirken mit der zweiten Magnetpaareinrichtung - bereitgestellt werden kann. Es können somit zwei in ihrer Stärke und Richtung verschiedene Magnetfelder bereitgestellt werden, die die erforderlichen Magnetfeldstärken zur selektiven Magnetisierung des hochkoerzitiven und des niederkoerzitiven Magnetmaterials bieten, ohne dass der Abstand zwischen den gegenüberliegenden Magneten und damit der Abstand zu den zwischen den Magneten hindurch geführten Wertdokumenten reduziert werden muss.

Eine erfindungsgemäße Vorrichtung ist zur Wertdokumentbearbeitung ausgestaltet, insbesondere als Sortiervorrichtung zum Prüfen und Sortieren von Wertdokumenten, als Banknotenein- und/oder -auszahlungseinrichtung, als Banknotenprüfeinrichtung oder dergleichen und umfasst die oben beschriebene Prüfanordnung sowie weitere Baugruppen zur Bearbeitung von Wertdokumenten. Beispielsweise kann als weitere Baugruppe der Vorrichtung ein Transportsystem zum Transportieren der Wertdokumente sowie Wertdokumenteingabefächer und -ausgabefächer und die zuvor erwähnte Auswerteeinrichtung vorgesehen sein.

Vorzugsweise umfassen die erste und die zweite Magnetpaareinrichtung jeweils nur ein einzelnes Magnetpaar mit Magneten, die einander bezüglich des Transportpfades gegenüberliegen. Hierbei umfasst gemäß einer bevorzugten Ausführungsform die erste Magnetpaareinrichtung erste Magnete, die derart auf gegenüberliegenden Seiten des Transportpfades angeordnet sind, dass deren Magnetpole einer ersten Polarität einander (und dem Transportpfad zugewandt) sind und deren Magnetpole mit dazu inverser Polarität voneinander (und von dem Transportpfad) abgewandt sind. Zudem umfasst die zweite Magnetpaareinrichtung gemäß dieser bevorzugten Ausführungsform auf gegenüberliegenden Seiten des Transportpfades liegende zweite Magneten, deren Magnetpole einer zu der ersten Polarität inversen zweiten Polarität einander (und dem Transportpfad) zugewandt sind und deren Magnetpole mit dazu inverser Polarität voneinander (und von dem Transportpfad) abgewandt sind. Durch das Zusammenwirken dieser Magnetpaareinrichtungen kann die Magnetisierungseinrichtung das zum Magnetisieren der hochkoerzitiven Magnetbereiche erforderliche erste, stärkere Magnetfeld bereitstellen.

Bei der erfindungsgemäßen Prüfanordnung ist im Einflussbereich der Magnetisierungseinrichtung, insbesondere zwischen den gegenüberliegenden Magneten der beiden Magnetpaareinrichtungen, keine Detektionseinrichtung zum Detektieren von Magnetsignalen angeordnet. Die Detektionseinrichtung ist bei der erfindungsgemäßen Prüfanordnung entlang des Transportpfads der Wertdokumente stromabwärts zu der Magnetisierungseinrichtung angeordnet.

Wie zuvor dargestellt, kann durch Zusammenwirken der beiden Magnetpaareinrichtungen eine erste Magnetfeldstärke erzielt werden, die größer als die von der ersten Magnetpaareinrichtung alleine erzielbare Magnetfeldstärke ist. Dazu werden die beiden Magnetpaareinrichtungen derart ausgestaltet und in der Prüfeinrichtung relativ zueinander angeordnet, dass sich die erzeugten Magnetfeldstärken in dem ersten Abschnitt zu der ersten, stärkeren Magnetfeldstärke addieren. Bevorzugt ist die Anordnung der Magnetpaareinrichtungen derart, dass die erste Magnetfeldstärke gegenüber der von der ersten Magnetpaareinrichtung in dem ersten Abschnitt alleine bereitgestellten Magnetfeldstärke um zumindest 5% erhöht ist und besonders bevorzugt um zumindest 10% erhöht ist.

Die Magnetisierungseinrichtung stellt die erste Magnetfeldstärke vorzugsweise, entlang des Transportpfads betrachtet, zwischen der ersten und der zweiten Magnetpaareinrichtung bereit. Durch Zusammenwirken der beiden Magnetpaareinrichtungen wirkt genau dort eine besonders hohe erste Magnetfeldstärke auf die Magnetmaterialien in dem Sicherheitselement ein. Zudem sind die beiden Magnetpaareinrichtungen vorzugsweise derart relativ zu dem Transportpfad angeordnet, dass die erste Magnetisierungsrichtung in der Transportebene der durch die Prüfanordnung transportierten Wertdokumente verläuft, z.B. im Wesentlichen parallel oder antiparallel zu der Transportrichtung. Andere diametral entgegengesetzte Magnetisierungsrichtungen sind jedoch auch möglich.

Die einzelnen Magnetfeldstärken und deren Verhältnis zueinander werden insbesondere durch den Abstand Δx, der entlang des Transportpfads des Wertdokuments zwischen den Magneten der ersten und der zweiten Magnetpaareinrichtung liegt, aufeinander abgestimmt. Der Abstand ist kleiner oder gleich 10 mm (Δx ≤ 10 mm). Vorzugsweise ist dieser Abstand größer als Null (Δx > 0 mm), so dass die Magnete der beiden Magnetpaareinrichtungen nicht unmittelbar aneinander grenzen. Durch einen Abstand Δx > 0 mm, insbesondere von mindestens Δx=0,5 mm, wird bei den bevorzugt verwendeten Magneten erreicht, dass die zweite Magnetfeldstärke ausreichend groß bleibt, um das niederkoerzitive Material in die zweite Magnetisierungsrichtung auszurichten. Denn durch einen Abstand Δx=0 könnte die Feldstärke des zweiten Magnetfelds für bestimmte niederkoerzitive Magnetmaterialien zu stark reduziert werden. Der Abstand Δx ≤ 10 mm ermöglicht demgegenüber eine besonders große erste Magnetfeldstärke.

Darüber hinaus hat der Abstand Δz, den die beiden Magnete der ersten und der zweiten Magnetpaareinrichtung in der Richtung jeweils senkrecht zur Transportebene des Wertdokuments voneinander aufweisen, unter anderem Einfluss auf die beiden Magnetfeldstärken und deren räumliche Variation. Durch einen vergleichsweise großen Abstand Δz ≥ 2 mm, bevorzugt durch Δz ≥ 5 mm, besonders bevorzugter durch Δz ≥ 8 mm, wird erreicht, dass auf bzw. nahe bei dem Transportpfad ein in senkrechter (z-) Richtung ausgedehnter Abschnitt des ersten Magnetfeldes bereitgestellt wird, in dem das erste Magnetfeld homogen ist, d.h. in dem die Richtung und Stärke des Magnetfelds im Wesentlichen konstant ist. Dies ist deshalb vorteilhaft, weil in diesem homogenen Abschnitt des ersten Magnetfelds die Magnetmaterialien stets im Wesentlichen in dieselbe Richtung magnetisiert werden, z.B. stets derart, dass die aus der Transportebene des Wertdokuments hinausführende, z.B. senkrecht zu der Wertdokumentebene verlaufende Magnetisierung sehr gering ist. Dadurch führen transportbedingte Flatterbewegungen eines Wertdokuments (in die zu der Wertdokumentebene senkrechte Richtung) nur zu geringen Variationen in der Magnetisierungsrichtung der Magnetmaterialien. Die Ausdehnung des homogenen Abschnitts des ersten Magnetfelds in die zur Transportrichtung senkrechte Richtung beträgt dazu mindestens 0,5 mm, vorzugsweise mindestens 1 mm.

Durch das Zusammenwirken der Magnetpaareinrichtungen, insbesondere durch die oben erwähnten Abstände Δx und Δz, wird erreicht, dass in dem ersten Abschnitt des ersten Magnetfelds eine, gegebenenfalls vorhandene, senkrecht zur Transportebene des Wertdokuments orientierte Komponente des ersten Magnetfelds, höchstens 10% der Magnetfeldstärke der parallel zur Transportebene des Wertdokuments orientierten Komponente des ersten Magnetfelds aufweist. Das heißt, eine ggf. in dem ersten Abschnitt des ersten Magnetfelds vorhandene, in z-Richtung weisende Magnetfeldkomponente H_{z} beträgt höchstens 10% der Magnetfeldstärke Hₓ in x-Richtung am selben Ort. Dadurch lässt sich sicherstellen, dass die tatsächliche Magnetisierungsrichtung der Magnetmaterialien weitgehend der gewünschten ersten Magnetisierungsrichtung (x) entspricht.

Durch die oben geschilderte geeignete relative Anordnung der ersten und zweiten Magnetpaareinrichtung zueinander kann zudem das Verhältnis zwischen der ersten Magnetfeldstärke und der zweiten Magnetfeldstärke genau abgestimmt werden, so dass dieses Verhältnis zum Beispiel zwischen 3:1 und 15:1 liegt. Dadurch lassen sich die in Sicherheitselementen verwendeten hochkoerzitiven und niederkoerzitiven Magnetmaterialien selektiv magnetisieren und zuverlässig auswerten.

Gemäß einer bevorzugten Ausführungsform umfasst die Detektoreinrichtung, entlang des Transportpfades betrachtet, einen ersten Magnetdetektor zum Detektieren von ersten Magnetsignalen des Sicherheitselements und einen zweiten Magnetdetektor zum Detektieren von zweiten Magnetsignalen des Sicherheitselements. Beispielsweise wirkt dabei ein von einer weiteren Magnetisierungseinrichtung bereitgestelltes weiteres Magnetfeld vor dem Detektieren der zweiten Magnetsignale auf das Sicherheitselement ein. Durch den Einsatz des weiteren Magnetfelds vor der Detektion der zweiten Magnetsignale unterscheiden sich diese zusätzlich von den detektierten ersten Magnetsignalen, so dass sich eine weitere Informationsquelle hinsichtlich der räumlichen Anordnung der hochkoerzitiven und niederkoerzitiven Magnetmaterialien in dem Sicherheitselement ergibt und diese zuverlässiger reproduziert werden kann. Dadurch können auch kombinierte Bereiche des Sicherheitselements zuverlässig erfasst werden, die sowohl hochkoerzitive als auch niederkoerzitive Magnetmaterialien aufweisen.

Weitere Merkmale und Vorteile der Erfindung ergeben sich aus der folgenden Beschreibung der erfindungsgemäßen Ausführungsbeispiele sowie weiterer Ausführungsalternativen im Zusammenhang mit den Zeichnungen, die schematisch zeigen:
- Figur 1: eine Vorrichtung zum Prüfen von Wertdokumenten, umfassend eine erfindungsgemäße Prüfanordnung mit Magnetisierungseinrichtung und Detektoreinrichtung;
- Figur 2: die aus zwei Magnetpaaren bestehende Magnetisierungseinrichtung sowie die durch diese erzeugten Feldstärken;
- Figur 3: ein Verfahren zum Prüfen von Wertdokumenten.

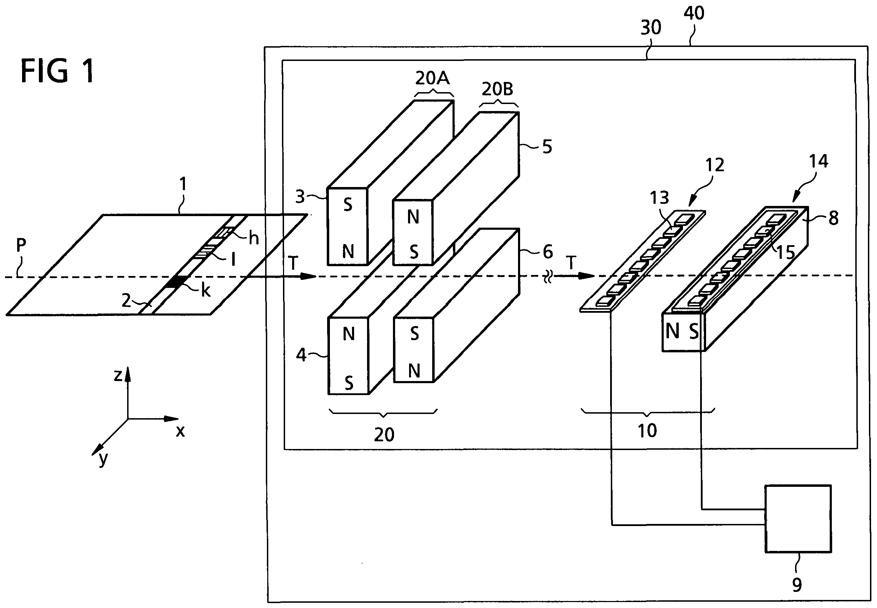

Fig. 1 zeigt eine bevorzugte Ausführungsform einer Vorrichtung 40 zum Prüfen und Bearbeiten von mit einem Sicherheitselement 2 versehenen Wertdokumenten 1, z.B. Banknoten, Coupons, Checks oder andere blattförmige Wertdokumente. Zur Prüfung des Wertdokuments 1 umfasst die Vorrichtung eine Prüfanordnung 30, umfassend eine Magnetisierungseinrichtung 20 und eine Detektoreinrichtung 10, sowie eine Auswerteeinrichtung 9 zur Auswertung von Magnetsignalen, die von der Detektoreinrichtung 10 detektiert werden. Die Prüfanordnung wird z.B. zur Prüfung der Echtheit und/oder der Art des Wertdokuments 1 verwendet. Die Vorrichtung 40 kann auch weitere (nicht gezeigte) Baugruppen oder Komponenten besitzen, die zur Wertdokumentbearbeitung erforderlich sind, zum Beispiel Transportmechanismen, die ein zu prüfendes Wertdokument 1 entlang eines Transportpfades P in eine Transportrichtung T geeignet durch die Prüfanordnung 30 hindurchführt, Anzeige- und Bedieneinrichtungen, Ein- und Ausgabefächer sowie ggf. Zwischenspeicher zur Ablage der geprüften Wertdokumente 1.

Neben der in Fig. 1 dargestellten Magnetisierungseinrichtung 20 und Detektoreinrichtung 10 kann auch die Prüfanordnung 30 weitere Baugruppen oder Komponenten umfassen. Gemäß einer alternativen Ausführungsform kann die Auswerteeinrichtung 9 auch Bestandteil der Prüfanordnung 30 sein. In jedem Falle ist die Auswerteeinrichtung 9 jedoch zum Empfangen der auszuwertenden Messergebnisse mit der Detektoreinrichtung 10 verbunden.

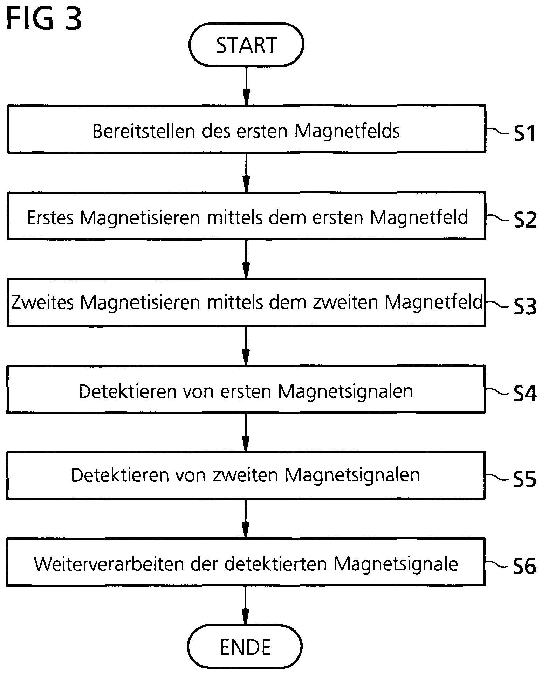

Zur Prüfung wird das Wertdokument 1 in der Prüfanordnung 30 entlang des Transportpfades P zunächst durch die Magnetisierungseinrichtung 20 hindurchgeführt, dort erfindungsgemäß magnetisiert, und dann an der Detektoreinrichtung 10 vorbeigeführt, welche abhängig von der Magnetisierung des Sicherheitselements 2 Magnetsignale detektiert. Die Prüfanordnung 30 der Fig. 1 wird nachfolgend im Zusammenhang mit dem in Fig. 3 skizzierten Prüfverfahren beschrieben.

Das Wertdokument 1 weist ein Sicherheitselement 2 mit einer Magnetkodierung auf. In Fig. 1 ist das Sicherheitselement 2 beispielhaft als Sicherheitsfaden ausgebildet. Allerdings sind auch beliebige andere Formen des Sicherheitselements 2 denkbar, z.B. Sicherheitsstreifen, flächige Magnetlackauftragungen, magnetische Druckfarbe oder dergleichen. Das beispielhaft dargestellte Sicherheitselement 2 gemäß Fig. 1 umfasst hochkoerzitive Magnetbereiche h, in denen ein hochkoerzitives Magnetmaterial angeordnet ist, niederkoerzitive Magnetbereiche 1, in denen ein niederkoerzitives Magnetmaterial angeordnet ist und kombinierte Magnetbereiche k, in denen sowohl das hochkoerzitive Magnetmaterial als auch das niederkoerzitive Magnetmaterial angeordnet ist. Zum Beispiel kann ein kombinierter Magnetbereich k die beiden Magnetmaterialien übereinander angeordnet oder als Mischung umfassen. Mit der vorliegenden Erfindung können generell jedoch beliebige magnetbasierte Sicherheitselemente 2 geprüft werden, z.B. auch solche, die nur hochkoerzitive Magnetbereiche h oder nur niederkoerzitive Magnetbereiche 1 umfassen. Die Magnetbereiche h, k, l können prinzipiell beliebig häufig und beliebig angeordnet auf dem Sicherheitselement 2 vorhanden sein, zum Beispiel auch in Transportrichtung T hintereinander oder beliebig zweidimensional auf dem Wertdokument verteilt.

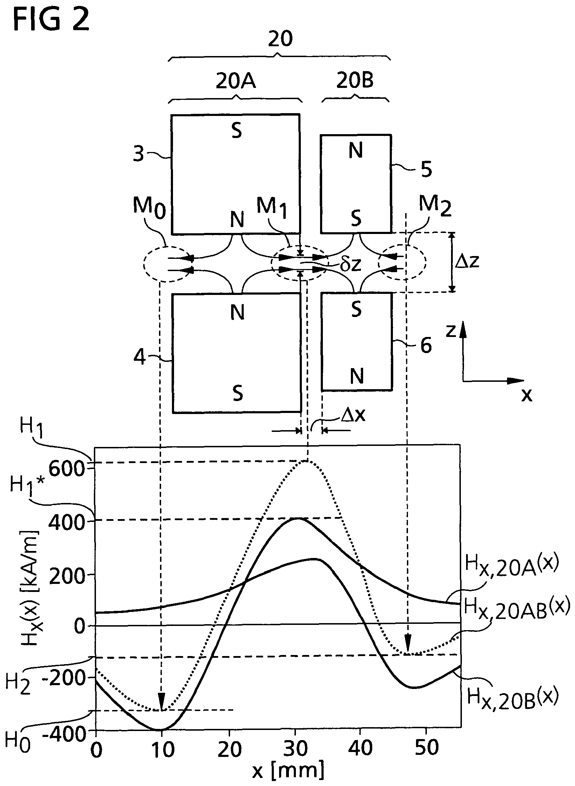

Die Magnetisierungseinrichtung 20 umfasst ein erstes Magnetpaar 20A mit zumindest den Magneten 3 und 4 und ein zweites Magnetpaar 20B mit zumindest den Magneten 5 und 6. Weitere Details hinsichtlich der dadurch erzeugten Magnetfelder M₁ und M₂ werden nachfolgend im Zusammenhang mit Fig. 2 beschrieben. Bei der Magnetisierungseinrichtung 20 sind die Nordpole N der Magneten 3 und 4 und die Südpole S der Magneten 5 und 6 entlang des Transportpfades P einander zugewandt angeordnet. Ebenso gut könnten aber auch die Südpole S der Magneten 3, 4 und die Nordpole N der Magneten 5, 6 einander zugewandt sein.

Gemäß der Ausführungsform der Fig. 1 sind die beiden Magnetpaare 20A, 20B in einem lateralen Abstand Δx entlang des Transportfades P (in x-Richtung) angeordnet, der größer als 0 mm und kleiner oder gleich 10 mm ist.

Der Abstand Δz der Magnete 3 und 4 des Magnetpaars 20A bzw. der Magnete 5 und 6 des Magnetpaars 20B über den Transportpfad P hinweg (also in z-Richtung) beträgt einige mm. In dem zwischen den Magneten 3, 4 und 5, 6 liegenden ersten Abschnitt wird dadurch möglichst ein genau in x-Richtung weisendes erstes Magnetfeld erzielt, das eine verschwindende oder möglichst geringe Feldstärke in z-Richtung aufweist. Vorzugsweise sind jeweils die gegenüberliegenden Magnete 3, 4 bzw. 5, 6 der Magnetpaare 20A, 20B identisch.

Um zu gewährleisten, dass das durch das Magnetpaar 20A gebildete Magnetfeld M₁ stärker ist als das durch das Magnetpaar 20B gebildete Magnetfelds M₂ sind die Magnete 5, 6 des Magnetpaares 20B schwächer als die Magnete 3, 4 des Magnetpaares 20A. Alternativ können die Magnete 3, 4, 5, 6 jedoch auch alle dieselbe Stärke haben, wenn die Magnete 5, 6 des zweiten Magnetpaares 20B einen größerem Abstand Δz aufweisen als die Magnete 3, 4 des ersten Magnetpaares 20A. Zum Beispiel haben die Magnete 3,4 des ersten Magnetpaares 20A eine Stärke (Remanenz) von Br = 1,43 T und die Magnete 5, 6 des zweiten Magnetpaares 20B eine Stärke (Remanenz) von Br = 1 T. Die Magnete enthalten bevorzugt NdFeB oder bestehen daraus. Alternativ können aber auch Elektromagnete verwendet werden.

Der Graph im unteren Teil der Fig. 2 zeigt die x-Komponente H_{x,20A}(x) der ausschließlich durch das erste Magnetpaar 20A erzeugten Magnetfeldstärke als Funktion der Position x entlang des zwischen den Magneten 3, 4 bzw. 5, 6 verlaufenden Transportpfades P. Zum Vergleich ist die x-Komponente H_{x,20B}(x) der ausschließlich durch das zweite Magnetpaar 20B erzeugten Magnetfeldstärke und die x-Komponente der durch Zusammenwirken des ersten und des zweiten Magnetpaares 20A, 20B erzeugten Magnetfeldstärke H_{x,20AB}(x) dargestellt.

Durch das Zusammenwirken der Magnetpaare 20A und 20B wird das erste Magnetfeld M₁ der ersten Magnetfeldstärke H₁ in dem ersten Abschnitt bereitgestellt, der in Figur 2 zwischen den Magnetpaaren 20A und 20B liegt, vgl. Schritt S1 des Prüfverfahrens gemäß Fig. 3. Hierbei ergibt sich die Feldstärke H₁ des Magnetfelds M₁ indem sich die Magnetfeldstärken H_{x,20A}(x) und H_{x,20B}(x) addieren. Die einzelnen Magnetpaare 20A und 20B würden jeweils alleine keine derart hohe Feldstärke bereitstellen können. Vielmehr ist die Feldstärke H₁ mehr als 10% größer, als eine durch das erste Magnetpaar 20A alleine erzeugbare Maximalfeldstärke H₁*. Auf diese Weise ist in dem ersten Abschnitt, trotz des relativ großen Abstands Δz zwischen den Magneten 3 und 4 bzw. 5 und 6, eine hohe erste Magnetfeldstärke H₁ erzielbar, die insbesondere größer ist als die Koerzitivfeldstärke des hochkoerzitiven Materials. Der Abstand Δx wird zu diesem Zweck kleiner oder gleich 10 mm gewählt.

Die hohe Magnetfeldstärke H₁ des ersten Magnetfelds M₁ ist erforderlich, um in Schritt S2 das hochkoerzitive Magnetmaterial der Magnetbereiche h und k zu magnetisieren und geeignet auszurichten. Dabei wird auch das niederkoerzitive Material in den Magnetbereichen k und l magnetisiert, so dass in Schritt S2 alle Magnetbereiche h, k, l magnetisiert und gleichmäßig ausgerichtet werden. Da die Feldlinien des ersten Magnetfelds M₁ im Wesentlichen in der x-Richtung verlaufen, werden die Magnetbereiche h, k, l bei der Magnetisierung gemäß Schritt S2 in x-Richtung ausgerichtet, also parallel zu der Transportrichtung T des Wertdokuments 1 entlang des Transportpfades P. Dabei bildet sich innerhalb des ersten Abschnitts des ersten Magnetfelds M₁ ein im Wesentlichen homogenes Magnetfeld aus, in dem die Magnetfeldlinien im Wesentlichen in x-Richtung verlaufen, d.h. parallel zu der Transportrichtung T. Im ersten Abschnitt des ersten Magnetfelds M₁, in dem in x-Richtung die Feldstärke H₁ herrscht, beträgt die Magnetfeldstärke in z-Richtung höchstens 10% der Magnetfeldstärke in x-Richtung. Der erste Abschnitt des Magnetfelds M₁ besitzt eine Größe, die sicherstellt, dass die Magnetbereiche h, l, k des Wertdokuments 1 tatsächlich wie gewünscht im Wesentlichen in x-Richtung ausgerichtet werden. Durch einen vergleichsweise großen Abstand Δz und einen geringen Abstand Δx kann die Ausdehnung und Stärke des homogenen Magnetfelds und dessen Homogenität optimiert werden.

Damit mögliche Flatterbewegungen eines zwischen den Magneten 3 und 4 bzw. 5 und 6 in Transportrichtung T (d.h. in x-Richtung) hindurchtransportierten Wertdokuments 1 in z-Richtung nicht zu übermäßigen Abweichungen der tatsächlichen Magnetisierungsrichtung der Magnetbereiche h, k, 1 von der gewünschten, idealen Magnetisierungsrichtung führen, hat der homogene Abschnitt des ersten Magnetfelds M₁ eine Ausdehnung δz (Ausdehnung in z-Richtung) von zumindest 0,5 mm bis 1 mm. Je nach Anwendung und Art der zu prüfenden Wertdokumente 1 kann es auch sinnvoll sein, einen homogenen Bereich eine Ausdehnung δz ≥ 1 mm vorzusehen. Eine große Ausdehnung δz des homogenen Bereichs wird insbesondere dadurch erzielt, dass die Magneten 3, 4 bzw. 5, 6 der Magnetpaare 20A, 20B in einem relativ großen Abstand Δz angeordnet werden, zum Beispiel von zumindest 5mm.

In Transportrichtung T gesehen wird nach dem ersten Magnetfeld M₁ ein zweites Magnetfeld M₂ mit einer zweiten Magnetfeldstärke H₂ erzeugt. Die Magnetpaare 20A, 20B der Magnetisierungseinrichtung 20 sind im Hinblick auf die oben diskutierten Parameter derart ausgelegt, dass das zweite Magnetfeld M₂ im Vergleich zu dem ersten Magnetfeld M₁ in eine entgegengesetzte, antiparallele Richtung orientiert ist und eine geringere zweite Magnetfeldstärke H₂ < H₁ aufweist. Hierbei besitzt das zweite Magnetfeld eine Stärke H₂, durch die in Schritt S3 nur das in den niederkoerzitiven Magnetbereichen 1 sowie in den kombinierten Magnetbereichen k angeordnete niederkoerzitive Magnetmaterial ummagnetisiert wird, nicht jedoch das in den hochkoerzitiven Magnetbereichen und (auch) in den kombinierten Magnetbereichen k angeordnete hochkoerzitive Magnetmaterial. Damit das zweite Magnetfeld M₂ eine hierfür ausreichende Magnetfeldstärke H₂ erreicht, wird gemäß der Ausführungsform der Fig. 1 und 2 ein Abstand von Δx > 0 zwischen den Magnetpaaren 20A und 20B eingerichtet. Dieser Abstand wird z.B. durch Abstandsplättchen erreicht, durch welche die Magnete 3 und 5 bzw. 4 und 6 miteinander verbunden sind, deren Dicke bevorzugt zumindest 0,5 mm beträgt.

Für das zuvor beschriebene selektive Magnetisieren der in der Praxis typischerweise verwendeten hochkoerzitiven und niederkoerzitiven Magnetmaterialien ist auch das Verhältnis H₁ : H₂ der beiden Magnetfeldstärken H₁ und H₂ in x-Richtung geeignet zu wählen. Ein solches Verhältnis kann durch geeignete Anordnung und Ausgestaltung der Magnetpaare 20A und 20B hergestellt werden, insbesondere durch einen geeigneten Abstand Δx. Gewünschte und praktisch sinnvolle Verhältnisse H₁ : H₂ der beiden Magnetfeldstärken liegen zwischen 3:1 und 15:1. Die Feldstärke H₁ des ersten Magnetfelds M₁ ist vorzugsweise größer oder gleich 300 kA/m und kann z.B. bis zu 1.000 kA/m betragen. Die Magnetfeldstärke H₂ des zweiten Magnetfelds M₂ beträgt in der Regel zumindest 50 kA/m.

Beim Magnetisieren des hochkoerzitiven Magnetmaterials ist es erforderlich, dass die Magnetfeldstärke H₁ des ersten Magnetfelds M₁ größer als die Koerzitivfeldstärke dieses Materials ist. Idealerweise ist die Magnetfeldstärke H₁ um mindestens den Faktor 1,5 größer als die Koerzitivfeldstärke des hochkoerzitiven Magnetmaterials. Selbiges Verhältnis gilt auch für die Magnetfeldstärke H₂ und die Koerzitivfeldstärke des niederkoerzitiven Magnetmaterials.

Entlang des Transportpfades P entsteht durch die Prüfanordnung 30, in Transportrichtung des Wertdokuments 1 betrachtet, vor dem ersten Magnetfeld M₁ zudem ein Magnetfeld M₀. Die Magnetfeldstärke H₀ des Magnetfelds Mo kann zwar signifikante Werte annehmen, welche zumindest zur Magnetisierung der niederkoerzitiven Magnetbereiche h ausreichend sein können. Da jedoch entlang des Transportpfades P auf das Magnetfeld M₀ das deutlich stärkere erste Magnetfeld M₁ folgt, wird eine etwaige Magnetisierung der betreffenden Magnetbereiche k, l durch das Magnetfeld M₀ durch das deutlich stärkere Magnetfeld M₁ wieder aufgehoben, indem sämtliche Magnetbereiche h, k, l in die gewünschte erste Magnetisierungsrichtung ausgerichtet werden. Das durch den Aufbau der Magnetisierungsanordnung 20 bedingte Magnetfeld M₀ wirkt sich somit nicht auf die von der Detektoreinrichtung 10 in den Schritten S4 und S5 zu detektierenden Magnetsignale aus.

In der Prüfanordnung 30 ist die Detektoreinrichtung 10 in Transportrichtung T nach der Magnetisierungseinrichtung 20 angeordnet. Im Bereich der Magnetisierungseinrichtung 20, z.B. zwischen den Magnetpaaren 20A, 20B, befindet sich dagegen kein Magnetdetektor, da die Wertdokumente im Bereich der Magnetisierungseinrichtungen ausschließlich magnetisiert, aber deren Magnetsignale dort nicht detektiert werden. Die Detektoreinrichtung 10 umfasst eine erste Detektorzeile 12 mit magnetosensitiven Elementen 13, mit der im Schritt S4 erste Magnetsignale detektiert werden. Mit einer zweiten Detektorzeile 14 mit magnetosensitiven Elementen 15 werden im Schritt S5 zweite Magnetsignale detektiert. Abweichend von Fig. 1 können die Detektorzeilen 12,14 auch schräg zu der Transportrichtung T angeordnet sein, um eine höhere Ortsauflösung zu erreichen. Ebenso können anstatt der Detektorzeilen 12,14 zum Detektieren der Magnetsignale auch jeweils nur ein einzelnes, breites magnetosensitives Element oder eine oder wenige Einzelspuren aus jeweils einem magnetosensitiven Element 13 und einem magnetosensitiven Element 15 verwendet werden, um die Magnetisierung nur in den entsprechenden Spuren zu erfassen und auszuwerten.

Vor dem Schritt S5 zur Detektion der zweiten Magnetsignale kann ein durch eine weitere Magnetisierungseinrichtung 8 erzeugtes weiteres Magnetfeld auf das Sicherheitselement 2 des Wertdokuments 1 einwirken, das z.B. parallel zur Transportrichtung orientiert sein kann. Das weitere Magnetfeld kann, wie bei der Anordnung in Figur 1, auch während des Detektionsschrittes S5 auf das Sicherheitselement 2 einwirken.

Die ermittelten ersten und zweiten Magnetsignale werden schließlich in Schritt S6 von der Auswerteeinrichtung 9 ausgewertet, um die räumliche Anordnung der hochkoerzitiven, der niederkoerzitiven und der kombinierten Magnetbereiche h, l, k zu bestimmen und daraus eine Aussage über die Echtheit und/oder die Art des Wertdokuments 1 abzuleiten.

Hinsichtlich der kombinierten Magnetbereiche k, die sowohl niederkoerzitive als auch hochkoerzitive Magnetmaterialien umfassen, wird die Magnetisierung durch die Magnetisierungseinrichtung 20 derart durchgeführt, dass die aus der Magnetisierung durch das erste, stärkere und parallel orientierte Magnetfeld M₁ und das zweite, schwächere und antiparallel orientierte Magnetfeld M₂ resultierende Magnetisierung der kombinierten Magnetbereiche k annähernd Null beträgt. Dies wird insbesondere durch eine geeignete Wahl des hoch- und des niederkoerzitiven Magnetmaterials und der Flächendichten dieser Materialien in den kombinierten Magnetbereichen k erreicht. Insbesondere ist es hierbei sinnvoll, dass beide Magnetmaterialien zumindest näherungsweise die gleiche remanente Flussdichte aufweisen und in den kombinierten Magnetbereichen k mit derselben Flächendichte aufgebracht sind.

Bei der Detektion der ersten Magnetsignale in Schritt S4 werden mittels der ersten Detektorzeile 12, welche Magnetisierungen in einer zu der Transportrichtung T parallelen Magnetisierungsrichtung erfasst, erste Magnetsignale detektiert, die die räumliche Anordnung der hochkoerzitiven Magnetbereiche h und der niederkoerzitiven Magnetbereiche l auf dem Sicherheitselement 2 besonders gut wiedergeben. Die kombinierten Magnetbereiche k rufen dort jedoch nahezu kein Magnetsignal hervor.

Alternativ zu der Ausführungsform der Detektoreinrichtung gemäß Fig. 1 sind auch Detektorausgestaltungen möglich, bei denen bereits anhand der mittels der ersten Detektorzeile 12 gewonnenen ersten Magnetsignale die Anordnung der Magnetbereiche h, k, l bestimmt werden kann. Beispielsweise können die Flächendichte der beiden Magnetmaterialien in den kombinierten Magnetbereichen k sowie die erste und die zweite Magnetfeldstärke M₁, M₂ verschieden gewählt werden.

Bei dem Ausführungsbeispiel gemäß Fig. 1 und 2 wird die Anordnung der kombinierten Magnetbereiche k auf dem Sicherheitselement 2 jedoch basierend auf den mittels der zweiten Detektorzeile 14 gemessenen zweiten Magnetsignalen bestimmt. Damit die zweite Detektorzeile 14, die identisch mit der ersten Detektorzeile 12 sein kann, von den ersten Magnetsignalen unterscheidbare zweite Magnetsignale erfasst, ist die weitere Magnetisierungseinrichtung 8 zur Erzeugung eines weiteren Magnetfelds vorgesehen. Diese ist derart ausgestaltet, dass das vor der Detektion der zweiten Magnetsignale auf das Sicherheitselement 2 einwirkende weitere Magnetfeld das niederkoerzitive Magnetmaterial von der negativen in die positive x-Richtung ummagnetisiert, nicht jedoch das hochkoerzitive Magnetmaterial, welches bereits in positiver x-Richtung ausgerichtet war.

Durch die Ummagnetisierung des niederkoerzitiven Magnetmaterials in x-Richtung gleicht dieses in den kombinierten Magnetbereichen k die Magnetisierungen des hochkoerzitiven Magnetmaterials in x-Richtung nicht mehr aus, so dass dort eine deutliche Magnetisierungskomponente in x-Richtung verbleibt. Dadurch kann die zweite Detektorzeile 14 zusätzlich zu den von den hochkoerzitiven Magnetbereichen h ausgehenden zweiten Magnetsignalen auch von den kombinierten Magnetbereichen k ausgehende deutliche zweite Magnetsignale erfassen. In Kombination erlauben die ersten und zweiten Magnetsignale dann die genaue Lokalisierung der Magnetbereiche h, k, l auf dem Sicherheitselement 2 durch die Auswerteeinrichtung 9.

Alternativ ist es möglich, dass das weitere Magnetfeld das niederkoerzitive Magnetmaterial - insbesondere auch in den kombinierten Magnetbereichen k - in z-Richtung ausrichtet, so dass in Schritt S5 von den kombinierten Bereichen k ausgehende deutliche zweite Magnetsignale ermittelt werden können. Außerdem kann ein derart starkes weiteres Magnetfeld verwendet werden, dass auch das hochkoerzitive Magnetmaterial ummagnetisiert wird, was ebenfalls zu einem gut detektierbaren Magnetsignal der kombinierten Bereiche führen kann.

## Patentansprüche

1. Prüfanordnung (30) zur Prüfung eines Wertdokuments (1) mit einem Sicherheitselement (2), wobei die Prüfanordnung entlang eines Transportpfades (P) des Wertdokuments (1) folgendes umfasst:
- eine Magnetisierungseinrichtung (20) zum Magnetisieren des Sicherheitselements (1), die entlang des Transportpfades (P) eine erste Magnetpaareinrichtung (20A) und eine zweite Magnetpaareinrichtung (20B) aufweist, und
- eine Detektoreinrichtung (10) zur Detektion von Magnetsignalen, die von dem Sicherheitselement (2) ausgehen, wobei die erste und zweite Magnetpaareinrichtung (20A, 20B) entlang des Transportpfads (P) derart nah benachbart zueinander angeordnet sind, dass, durch Zusammenwirken der ersten Magnetpaareinrichtung (20A) und der zweiten Magnetpaareinrichtung (20B), in einem ersten Abschnitt entlang des Transportpfads (P) ein erstes Magnetfeld (M₁) einer ersten Magnetfeldstärke (H₁) bereitgestellt wird, die größer ist als die in dem ersten Abschnitt durch die erste Magnetpaareinrichtung (20A) alleine bereitgestellte Magnetfeldstärke und die größer ist als die in dem ersten Abschnitt durch die zweite Magnetpaareinrichtung (20B) alleine bereitgestellte Magnetfeldstärke, **dadurch gekennzeichnet, dass**
- der Abstand (Δx) zwischen der ersten Magnetpaareinrichtung (20A) und der zweiten Magnetpaareinrichtung (20B) entlang des Transportpfads (P) kleiner oder gleich 10 mm ist, und
- der Abstand (Δz), den die ersten Magneten (3, 4) der ersten Magnetpaareinrichtung (20A) und die zweiten Magneten (5, 6) der zweiten Magnetpaareinrichtung (20B) in der Richtung senkrecht zur Transportebene des Wertdokuments (1) jeweils voneinander aufweisen, mindestens 2 mm beträgt.

2. Prüfanordnung nach Anspruch 1, **dadurch gekennzeichnet, dass** die erste Magnetfeldstärke (H₁) um zumindest 5% größer ist, bevorzugt um zumindest 10% größer ist, als eine durch die erste Magnetpaareinrichtung (20A) in dem ersten Abschnitt alleine bereitgestellte Magnetfeldstärke und als eine mit der zweiten Magnetpaareinrichtung (20B) in dem ersten Abschnitt alleine bereitgestellte Magnetfeldstärke.

3. Prüfanordnung nach einem der vorhergehenden Ansprüche, **dadurch gekennzeichnet, dass** durch die erste und zweite Magnetpaareinrichtung (20A, 20B) in einem zweiten Abschnitt, der entlang des Transportpfads (P) nach dem ersten Abschnitt angeordnet ist, ein zweites Magnetfeld (M₂) einer zweiten Magnetfeldstärke (H₂) bereitgestellt wird, die kleiner ist als die erste Magnetfeldstärke (H₁), wobei das zweite Magnetfeld (M₂) vorzugsweise antiparallel zum ersten Magnetfeld (M₁) orientiert ist.

4. Prüfanordnung (30) nach Anspruch 3, **dadurch gekennzeichnet, dass** die erste und zweite Magnetpaareinrichtung (20A, 20B) derart ausgebildet und angeordnet sind, dass das Verhältnis zwischen der ersten Magnetfeldstärke (H₁) und der zweiten Magnetfeldstärke (H₂) zwischen 3:1 und 15:1 liegt.

5. Prüfanordnung nach einem der vorhergehenden Ansprüche, **dadurch gekennzeichnet, dass**
- die erste Magnetpaareinrichtung erste Magneten (3, 4) umfasst, die derart auf gegenüberliegenden Seiten des Transportpfades (P) angeordnet sind, dass deren Magnetpole einer ersten Polarität (N) einander zugewandt sind und
- die zweite Magnetpaareinrichtung (20B) zweite Magneten (5, 6) umfasst, die derart auf gegenüberliegenden Seiten des Transportpfades (P) angeordnet sind, dass deren Magnetpole einer zu der ersten Polarität (N) inversen zweiten Polarität (S) einander zugewandt sind.

6. Prüfanordnung (30) nach Anspruch 5, **dadurch gekennzeichnet, dass** der Abstand (Δz), den die ersten Magneten (3, 4) der ersten Magnetpaareinrichtung (20A) und die zweiten Magneten (5, 6) der zweiten Magnetpaareinrichtung (20B) in der Richtung senkrecht zur Transportebene des Wertdokuments (1) jeweils voneinander aufweisen, mindestens 5 mm, bevorzugt mindestens 8 mm beträgt.

7. Prüfanordnung (30) nach einem der vorhergehenden Ansprüche, **dadurch gekennzeichnet, dass** der Abstand (Δx) zwischen der ersten Magnetpaareinrichtung (20A) und der zweiten Magnetpaareinrichtung (20B) entlang des Transportpfads (P) größer als Null ist, insbesondere größer als 0,5 mm.

8. Prüfanordnung (30) nach einem der vorhergehenden Ansprüche, **dadurch gekennzeichnet, dass** die erste und zweite Magnetpaareinrichtung (20A, 20B) derart ausgebildet und angeordnet sind, dass die Richtung des ersten Magnetfelds (M₁) im Wesentlichen parallel zur Transportebene des Wertdokuments (1) verläuft, vorzugsweise im Wesentlichen parallel oder antiparallel zur Transportrichtung (T) des Wertdokuments (1) entlang des Transportpfades (P).

9. Prüfanordnung (30) nach einem der vorhergehenden Ansprüche, **dadurch gekennzeichnet, dass** die erste und zweite Magnetpaareinrichtung (20A, 20B) derart ausgebildet und angeordnet sind, dass in dem ersten Abschnitt die Komponente des ersten Magnetfelds (M₁), die in eine zur Transportebene des Wertdokuments (1) senkrechten Richtung orientiert ist, höchstens 10% der Komponente des ersten Magnetfelds (M₁) beträgt, die parallel zur Transportebene des Wertdokuments (1) orientiert ist.

10. Prüfanordnung (30) nach einem der vorhergehenden Ansprüche, **dadurch gekennzeichnet, dass**
- die Prüfanordnung zur Prüfung eines Sicherheitselements (2) ausgebildet ist, welches ein hochkoerzitives Magnetmaterial einer ersten Koerzitivfeldstärke und gegebenenfalls ein niederkoerzitives Magnetmaterial einer zweiten Koerzitivfeldstärke umfasst, und
- die Magnetisierungseinrichtung (20) eingerichtet ist, durch das Zusammenwirken der ersten Magnetpaareinrichtung (20A) und der zweiten Magnetpaareinrichtung (20B) das erste Magnetfeld (M₁) mit einer ersten Magnetfeldstärke (H₁) bereitzustellen, die größer ist als die erste Koerzitivfeldstärke, und das zweite Magnetfeld (M₂) mit einer zweiten Magnetfeldstärke (H₂) bereitzustellen, die kleiner ist als die erste Koerzitivfeldstärke und größer ist als die zweite Koerzitivfeldstärke.

11. Prüfverfahren zum Prüfen eines Wertdokuments (1) mit einem Sicherheitselement (2), welches ein hochkoerzitives Magnetmaterial einer ersten Koerzitivfeldstärke und gegebenenfalls ein niederkoerzitives Magnetmaterial einer zweiten Koerzitivfeldstärke umfasst, mit den Schritten:
- Bereitstellen (S1) eines ersten Magnetfelds (M₁) einer ersten Magnetfeldstärke (H₁), die größer als die erste Koerzitivfeldstärke ist, in einem ersten Abschnitt entlang des Transportpfads (P) durch Zusammenwirken einer ersten Magnetpaareinrichtung (20A) und einer zweiten Magnetpaareinrichtung (20B), die entlang des Transportpfads (P) derart nah benachbart zueinander angeordnet sind, dass die erste Magnetfeldstärke größer ist als die durch die erste Magnetpaareinrichtung (20A) in dem ersten Abschnitt alleine bereitgestellte Magnetfeldstärke und größer ist als die in dem ersten Abschnitt durch die zweite Magnetpaareinrichtung (20B) alleine bereitgestellte Magnetfeldstärke, wobei
- der Abstand (Δx) zwischen der ersten Magnetpaareinrichtung (20A) und der zweiten Magnetpaareinrichtung (20B) entlang des Transportpfads (P) kleiner oder gleich 10 mm ist, und
- der Abstand (Δz), den die ersten Magneten (3, 4) der ersten Magnetpaareinrichtung (20A) und die zweiten Magneten (5,6) der zweiten Magnetpaareinrichtung (20B) in der Richtung senkrecht zur Transportebene des Wertdokuments (1) jeweils voneinander aufweisen, mindestens 2 mm beträgt,
- erstes Magnetisieren (S2) des Sicherheitselements (1) durch das erste Magnetfeld (M₁) derart, dass das hochkoerzitive Magnetmaterial, und das gegebenenfalls vorhandene niederkoerzitive Magnetmaterial, in eine erste Magnetisierungsrichtung ausgerichtet werden,
- zweites Magnetisieren (S3) des Sicherheitselements (1) durch ein zweites Magnetfeld (M₂), das im Wesentlichen durch die zweite Magnetpaareinrichtung (20B) bereitgestellt wird, um das gegebenenfalls vorhandene niederkoerzitive Magnetmaterial in eine zweite Magnetisierungsrichtung auszurichten, wobei das zweite Magnetfeld (M₂) eine zweite Magnetfeldstärke (H₂) aufweist, die kleiner ist als die erste Koerzitivfeldstärke und größer ist als die zweite Koerzitivfeldstärke, und
- Detektieren (S5, S6) von Magnetsignalen, die nach dem ersten und zweiten Magnetisieren von dem Sicherheitselement (2) ausgehen.

12. Prüfverfahren nach Anspruch 11, **dadurch gekennzeichnet, dass** zum Bereitstellen (S1) des ersten Magnetfelds (M₁) die erste und die zweite Magnetpaareinrichtung (20A, 20B) derart zusammenwirken, dass die erste Magnetfeldstärke (H₁) um zumindest 5% größer ist, bevorzugt um zumindest 10% größer ist, als eine mit der ersten Magnetpaareinrichtung (20A) in dem ersten Abschnitt alleine bereitgestellte Magnetfeldstärke.

13. Prüfverfahren nach einem der Ansprüche 11 bis 12, **dadurch gekennzeichnet, dass** das Wertdokument (1) mittels einer Prüfanordnung (30) nach einem der Ansprüche 1 bis 10 geprüft wird.

14. Vorrichtung (40) umfassend eine Prüfanordnung (30) nach einem der Ansprüche 1 bis 10, wobei die Vorrichtung (40) als Wertdokumentbearbeitungsvorrichtung zum Prüfen von Wertdokumenten ausgestaltet ist.

## Claims

1. A checking arrangement (30) for checking a value document (1) having a security element (2), wherein the checking arrangement comprises the following along a transport path (P) of the value document (1):
- a magnetization device (20) for magnetizing the security element (1), which comprises a first magnet-pair device (20A) and a second magnet-pair device (20B) along the transport path (P), and
- a detector device (10) for the detection of magnetic signals that emanate from the security element (2),
wherein the first and second magnet-pair devices (20A, 20B) are arranged along the transport path (P) adjacent to each other so close that through the interaction of the first magnet-pair device (20A) and the second magnet-pair device (20B) there is provided in a first section along the transport path (P) a first magnetic field (M₁) of a first magnetic field strength (H₁) which is greater than the magnetic field strength provided in the first section by the first magnet-pair device (20A) alone and which is greater than the magnetic field strength provided in the first section by the second magnet-pair device (20B) alone, **characterized in that**
- the distance (Δx) between the first magnet-pair device (20A) and the second magnet-pair device (20B) along the transport path (P) is smaller than or equal to 10 mm, and
- the distance (Δz) that the first magnets (3, 4) of the first magnet-pair device (20A) and the second magnets (5, 6) of the second magnet-pair device (20B) are respectively spaced apart in the direction perpendicular to the transport plane of the value document (1) amounts to at least 2 mm.

2. The checking arrangement according to claim 1, **characterized in that** the first magnetic field strength (H₁) is greater by at least 5%, preferably is greater by at least 10 %, than a magnetic field strength provided in the first section by the first magnet-pair device (20A) alone and than a magnetic field strength provided in the first section with the second magnet-pair device (20B) alone.

3. The checking arrangement according to any of the preceding claims, **characterized in that** by the first and second magnet-pair devices (20A, 20B) there is provided in a second section, which is arranged after the first section along the transport path (P), a second magnetic field (M₂) of a second magnetic field strength (H₂) that is smaller than the first magnetic field strength (H₁), wherein the second magnetic field (M₂) is oriented preferably antiparallel to the first magnetic field (M₁).

4. The checking arrangement (30) according to claim 3, **characterized in that** the first and second magnet-pair devices (20A, 20B) are configured and arranged in such a way that the ratio between the first magnetic field strength (H₁) and the second magnetic field strength (H₂) lies between 3:1 and 15:1.

5. The checking arrangement according to any of the preceding claims, **characterized in that**
- the first magnet-pair device comprises first magnets (3, 4) that are arranged on opposing sides of the transport path (P) in such a way that their magnetic poles of a first polarity (N) are facing each other and
- the second magnet-pair device (20B) comprises second magnets (5, 6) that are arranged on opposing sides of the transport path (P) in such a way that their magnetic poles of a second polarity (S) inverse to the first polarity (N) are facing each other.

6. The checking arrangement (30) according to claim 5, **characterized in that** the distance (Δz) that the first magnets (3, 4) of the first magnet-pair device (20A) and the second magnets (5, 6) of the second magnet-pair device (20B) are respectively spaced apart in the direction perpendicular to the transport plane of the value document (1) amounts to at least 5 mm, preferably at least 8 mm.

7. The checking arrangement (30) according to any of the preceding claims, **characterized in that** the distance (Δx) between the first magnet-pair device (20A) and the second magnet-pair device (20B) along the transport path (P) is larger than zero, in particular larger than 0.5 mm.

8. The checking arrangement (30) according to any of the preceding claims, **characterized in that** the first and second magnet-pair devices (20A, 20B) are configured and arranged in such a way that the direction of the first magnetic field (M₁) extends substantially parallel to the transport plane of the value document (1), preferably substantially parallel or antiparallel to the transport direction (T) of the value document (1) along the transport path (P).

9. The checking arrangement (30) according to any of the preceding claims, **characterized in that** the first and second magnet-pair devices (20A, 20B) are configured and arranged in such a way that in the first section the component of the first magnetic field (M₁) that is oriented in a direction perpendicular to the transport plane of the value document (1) amounts to no more than 10% of that component of the first magnetic field (M₁) that is oriented parallel to the transport plane of the value document (1).

10. The checking arrangement (30) according to any of the preceding claims, **characterized in that**
- the checking arrangement is configured for checking a security element (2) that comprises a high-coercive magnetic material of a first coercive field strength and, where applicable, a low-coercive magnetic material of a second coercive field strength, and
- the magnetization device (20) is adapted to provide, through the interaction of the first magnet-pair device (20A) and the second magnet-pair device (20B), the first magnetic field (M₁) having a first magnetic field strength (H₁) which is greater than the first coercive field strength, and to provide the second magnetic field (M₂) having a second magnetic field strength (H₂) that is smaller than the first coercive field strength and is greater than the second coercive field strength.

11. A checking method for checking a value document (1) having a security element (2) that comprises a high-coercive magnetic material of a first coercive field strength and, where applicable, a low-coercive magnetic material of a second coercive field strength, having the steps:
- providing (S1) a first magnetic field (M₁) of a first magnetic field strength (H₁) which is greater than the first coercive field strength in a first section along the transport path (P) through interaction of a first magnet-pair device (20A) and a second magnet-pair device (20B) that are arranged along the transport path (P) adjacent to each other so close that the first magnetic field strength is greater than the magnetic field strength provided in the first section by the first magnet-pair device (20A) alone and is greater than the magnetic field strength provided in the first section by the second magnet-pair device (20B) alone, wherein
- the distance (Δx) between the first magnet-pair device (20A) and the second magnet-pair device (20B) along the transport path (P) is smaller than or equal to 10 mm, and
- the distance (Δz) that the first magnets (3, 4) of the first magnet-pair device (20A) and the second magnets (5, 6) of the second magnet-pair device (20B) are respectively spaced apart in the direction perpendicular to the transport plane of the value document (1) amounts to at least 2 mm,
- first magnetizing (S2) of the security element (1) by the first magnetic field (M₁) in such a way that the high-coercive magnetic material, and the low-coercive magnetic material that might be present, are aligned in a first magnetization direction,
- second magnetizing (S3) of the security element (1) by a second magnetic field (M₂) that is provided substantially by the second magnet-pair device (20B), in order to align the low-coercive magnetic material that might be present into a second magnetization direction, wherein the second magnetic field (M₂) has a second magnetic field strength (H₂) that is smaller than the first coercive field strength and greater than the second coercive field strength, and
- detecting (S5, S6) of magnetic signals that emanate from the security element (2) after the first and second magnetizing.

12. The checking method according to claim 11, **characterized in that** for providing (S1) the first magnetic field (M₁) the first and the second magnet-pair device (20A, 20B) interact in such a way that the first magnetic field strength (H₁) is greater by at least 5%, preferably greater by at least 10%, than a magnetic field strength provided in the first section with the first magnet-pair device (20A) alone.

13. The checking method according to any of claims 11 to 12, **characterized in that** the value document (1) is checked by means of a checking arrangement (30) according to any of claims 1 to 10.

14. An apparatus (40) comprising a checking arrangement (30) according to any of claims 1 to 10, wherein the apparatus (40) is configured as a value document processing apparatus for checking value documents.

## Revendications

1. Agencement de vérification (30) destiné à la vérification d'un document de valeur (1) ayant un élément de sécurité (2), l'agencement de vérification comprenant ce qui suit le long d'un chemin de transport (P) du document de valeur (1) :
- un équipement de magnétisation (20) pour la magnétisation de l'élément de sécurité (1), lequel comporte le long du chemin de transport (P) un premier équipement de paire d'aimants (20A) et un deuxième équipement de paire d'aimants (20B), et
- un équipement de détecteur (10) pour la détection de signaux magnétiques qui émanent de l'élément de sécurité (2),
cependant que le premier et le deuxième équipement de paire d'aimants (20A, 20B) sont agencés de telle façon à étroite proximité l'un de l'autre le long du chemin de transport (P) que, par co-agissement du premier équipement de paire d'aimants (20A) et du deuxième équipement de paire d'aimants (20B), dans une première section le long du chemin de transport (P), un premier champ magnétique (M₁) d'une première intensité de champ magnétique (H₁) est mis à disposition, laquelle est supérieure à l'intensité de champ magnétique seule mise à disposition par le premier équipement de paire d'aimants (20A) dans la première section, et est supérieure à l'intensité de champ magnétique seule mise à disposition par le deuxième équipement de paire d'aimants (20B) dans la première section, **caractérisé en ce que**
- l'espacement (Δx) entre le premier équipement de paire d'aimants (20A) et le deuxième équipement de paire d'aimants (20B) le long du chemin de transport (P) est inférieur ou égal à 10 mm, et
- l'espacement (Δz) que présentent respectivement entre eux les premiers aimants (3, 4) du premier équipement de paire d'aimants (20A) et les deuxièmes aimants (5, 6) du deuxième équipement de paire d'aimants (20B) dans la direction perpendiculaire au plan de transport du document de valeur (1) est d'au moins 2 mm.

2. Agencement de vérification selon la revendication 1, **caractérisé en ce que** la première intensité de champ magnétique (H₁) est d'au moins 5 % supérieure, de préférence d'au moins 10 % supérieure à une intensité de champ magnétique seule mise à disposition par le premier équipement de paire d'aimants (20A) dans la première section et à une intensité de champ magnétique seule mise à disposition avec le deuxième équipement de paire d'aimants (20B) dans la première section.

3. Agencement de vérification selon une des revendications précédentes, **caractérisé en ce que**, par le premier et le deuxième équipement de paire d'aimants (20A, 20B) dans une deuxième section agencée après la première section le long du chemin de transport (P), un deuxième champ magnétique (M₂) d'une deuxième intensité de champ magnétique (H₂) est mis à disposition, laquelle est inférieure à la première intensité de champ magnétique (H₁), cependant que le deuxième champ magnétique (M₂) est orienté de préférence anti-parallèlement au premier champ magnétique (M₁).

4. Agencement de vérification (30) selon la revendication 3, **caractérisé en ce que** le premier et le deuxième équipement de paire d'aimants (20A, 20B) sont réalisés et agencés de telle façon que la relation entre la première intensité de champ magnétique (H₁) et la deuxième intensité de champ magnétique (H₂) est comprise entre 3 :1 et 15:1.

5. Agencement de vérification selon une des revendications précédentes, **caractérisé en ce que**
- le premier équipement de paire d'aimants comprend des premiers aimants (3, 4) qui sont agencés de telle façon sur des côtés opposés du chemin de transport (P) que leurs pôles magnétiques d'une première polarité (N) sont tournés l'un vers l'autre, et
- le deuxième équipement de paire d'aimants (20B) comprend des deuxièmes aimants (5, 6) qui sont agencés de telle façon sur des côtés opposés du chemin de transport (P) que leurs pôles magnétiques d'une deuxième polarité (S), inverse à la première polarité (N), sont tournés l'un vers l'autre.

6. Agencement de vérification (30) selon la revendication 5, **caractérisé en ce que** l'espacement (Δz) que présentent respectivement entre eux les premiers aimants (3, 4) du premier équipement de paire d'aimants (20A) et les deuxièmes aimants (5,6) du deuxième équipement de paire d'aimants (20B) dans la direction perpendiculaire au plan de transport du document de valeur (1) est d'au moins 5 mm, de préférence d'au moins 8 mm.

7. Agencement de vérification (30) selon une des revendications précédentes, **caractérisé en ce que** l'espacement (Δx) entre le premier équipement de paire d'aimants (20A) et le deuxième équipement de paire d'aimants (20B) le long du chemin de transport (P) est supérieur à zéro, en particulier supérieur à 0,5 mm.

8. Agencement de vérification (30) selon une des revendications précédentes, **caractérisé en ce que** le premier et le deuxième équipement de paire d'aimants (20A, 20B) sont réalisés et agencés de telle façon que la direction du premier champ magnétique (M₁) est essentiellement parallèle au plan de transport du document de valeur (1), de préférence essentiellement parallèle ou antiparallèle à la direction de transport (T) du document de valeur (1) le long du chemin de transport (P).

9. Agencement de vérification (30) selon une des revendications précédentes, **caractérisé en ce que** le premier et le deuxième équipement de paire d'aimants (20A, 20B) sont réalisés et agencés de telle façon que, dans la première section, le composant du premier champ magnétique (M₁) qui est orienté dans une direction perpendiculaire au plan de transport du document de valeur (1) correspond à au plus 10 % du composant du premier champ magnétique (M₁) qui est orienté parallèlement au plan de transport du document de valeur (1).

10. Agencement de vérification (30) selon une des revendications précédentes, **caractérisé en ce que**
- l'agencement de vérification est conçu pour la vérification d'un élément de sécurité (2) qui comprend un matériau magnétique hautement coercitif d'une première intensité de champ coercitive, et éventuellement un matériau magnétique faiblement coercitif d'une deuxième intensité de champ coercitive, et
- l'équipement de magnétisation (20) est conçu pour, par co-agissement du premier équipement de paire d'aimants (20A) et du deuxième équipement de paire d'aimants (20B), mettre à disposition le premier champ magnétique (M₁) avec une première intensité de champ magnétique (H₁) qui est supérieure à la première intensité de champ coercitive, et mettre à disposition le deuxième champ magnétique (M₂) avec une deuxième intensité de champ magnétique (H₂) qui est inférieure à la première intensité de champ coercitive et supérieure à la deuxième intensité de champ coercitive.

11. Procédé de vérification d'un document de valeur (1) ayant un élément de sécurité (2) qui comprend un matériau magnétique hautement coercitif d'une première intensité de champ coercitive et éventuellement un matériau magnétique faiblement coercitif d'une deuxième intensité de champ coercitive, comportant les étapes :
- mise à disposition (S1) d'un premier champ magnétique (M₁) d'une première intensité de champ magnétique (H₁) qui est supérieure à la première intensité de champ coercitive, dans une première section le long du chemin de transport (P) par co-agissement d'un premier équipement de paire d'aimants (20A) et d'un deuxième équipement de paire d'aimants (20B) qui sont agencés de telle façon à étroite proximité l'un de l'autre le long du chemin de transport (P) que la première intensité de champ magnétique est supérieure à l'intensité de champ magnétique seule mise à disposition par le premier équipement de paire d'aimants (20A) dans la première section, et est supérieure à l'intensité de champ magnétique seule mise à disposition par le deuxième équipement de paire d'aimants (20B) dans la première section, cependant que
- l'espacement (Δx) entre le premier équipement de paire d'aimants (20A) et le deuxième équipement de paire d'aimants (20B) le long du chemin de transport (P) est inférieur ou égal à 10 mm, et
- l'espacement (Δz) que présentent respectivement entre eux les premiers aimants (3, 4) du premier équipement de paire d'aimants (20A) et les deuxièmes aimants (5, 6) du deuxième équipement de paire d'aimants (20B) dans la direction perpendiculaire au plan de transport du document de valeur (1) est d'au moins 2 mm.
- première magnétisation (S2) de l'élément de sécurité (1) par le premier champ magnétique (M₁) de telle façon que le matériau magnétique hautement coercitif et le matériau magnétique faiblement coercitif éventuellement présent sont alignés dans une première direction de magnétisation,
- deuxième magnétisation (S3) de l'élément de sécurité (1) par un deuxième champ magnétique (M₂) qui est mis à disposition essentiellement par le deuxième équipement de paire d'aimants (20B) afin d'aligner dans une deuxième direction de magnétisation le matériau magnétique faiblement coercitif éventuellement présent, cependant que le deuxième champ magnétique (M₂) présente une deuxième intensité de champ magnétique (H₂) qui est inférieure à la première intensité de champ coercitive et supérieure à la deuxième intensité de champ coercitive, et
- détection (S5, S6) de signaux magnétiques qui émanent de l'élément de sécurité (2) après la première et la deuxième magnétisation.

12. Procédé selon la revendication 11, **caractérisé en ce que**, pour la mise à disposition (S1) du premier champ magnétique (M₁), le premier et le deuxième équipement de paire d'aimants (20A, 20B) co-agissent de telle façon que la première intensité de champ magnétique (H₁) est d'au moins 5 % supérieure, de préférence d'au moins 10 % supérieure, à une intensité de champ magnétique seule mise à disposition avec le premier équipement de paire d'aimants (20A) dans la première section.

13. Procédé selon une des revendications de 11 à 12, **caractérisé en ce que** le document de valeur (1) est vérifié au moyen d'un agencement de vérification (30) selon une des revendications de 1 à 10.

14. Dispositif (40) comprenant un agencement de vérification (30) selon au moins une des revendications de 1 à 10, cependant que le dispositif (40) est réalisé sous forme de dispositif de traitement de documents de valeur pour la vérification de documents de valeur.
